# EUROPÄISCHE PATENTSCHRIFT

(11) **EP 0 683 785 B1**
(45) Veröffentlichungstag und Bekanntmachung des Hinweises auf die Patenterteilung: **17.09.1997**
(21) Anmeldenummer: 94905731.9
(22) Anmeldetag: 29.01.1994
(51) Int. Cl.: C07F 9/40, C08K 5/5353

(54) **VERWENDUNG VON AMINOVINYLPHOSPHONSÄUREESTERN ALS LICHTSCHUTZMITTEL UND STABILISATOREN FÜR ORGANISCHES MATERIAL**
USE OF AMINOVINYL PHOSPHONIC ACID ESTERS AS PHOTOPROTECTIVE AGENTS AND STABILIZERS FOR ORGANIC MATERIAL
UTILISATION D'ESTERS D'ACIDE PHOSPHONIQUE AMINOVINYLIQUE COMME AGENTS PHOTOPROTECTEURS ET STABILISANTS POUR MATIERES ORGANIQUES

(30) Priorität: 09.02.1993 DE 4303648
(43) Veröffentlichungstag der Anmeldung: 29.11.1995
(73) Patentinhaber: BASF Aktiengesellschaft, 67063 Ludwigshafen (DE)
(72) Erfinder: HOLDERBAUM, Martin, D-67065 Ludwigshafen (DE); AUMUELLER, Alexander, D-67435 Neustadt (DE); TRAUTH, Hubert, D-67373 Dudenhofen (DE)
(86) Internationale Anmeldenummer: EP9400254
(87) Internationale Veröffentlichungsnummer: WO9418210

(56) Entgegenhaltungen:
- EP-A- 0 032 663
- DE-A- 1 911 768
- FR-A- 2 178 055

## Beschreibung

Die vorliegende Erfindung betrifft die Verwendung von Aminovinylphosphonsäureestern der allgemeinen Formel I 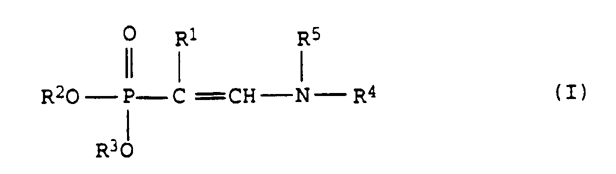 in der
- R¹: Cyano, einen Rest der Formel -CO-OR⁶ oder eine Gruppierung der Formel 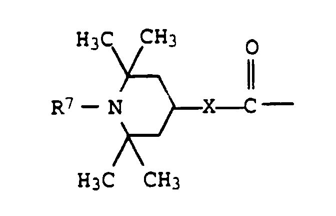 bezeichnet,
- R², R³ und R⁶: C₁- bis C₂₀-Alkyl, C₅- bis C₈-Cycloalkyl, C₇- bis C₁₈-Aralkyl, Phenyl oder Tolyl bedeuten,
- R⁴: Phenyl, welches durch ein bis drei C₁- bis C₁₂-Alkylgruppen, C₁- bis C₁₂-Alkoxygruppen, Halogenatome, Cyanogruppen, Hydroxylgruppen, Phenylgruppen oder Gruppen der Formel -CO-OR⁶, -CO-R⁶, -CO-NHR⁶, -O-CO-R⁶ oder -NH-CO-R⁶ substituiert sein kann, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert und durch ein bis drei C₁- bis C₁₂-Alkylgruppen, C₁- bis C₁₂-Alkoxygruppen, Halogenatome, Cyanogruppen, Hydroxylgruppen, Phenylgruppen, Phenoxygruppen oder C₁- bis C₁₂-Alkoxycarbonylgruppen substituiert sein kann, oder eine Gruppierung der Formel 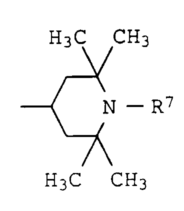 bezeichnet,
- R⁵: Wasserstoff oder C₁- bis C₁₂-Alkyl bedeutet,
- R⁷: Wasserstoff, C₁- bis C₆-Alkyl, Formyl, C₂- bis C₆-Alkanoyl, C₁- bis C₁₂-Alkoxy, C₅- bis C₆-Cycloalkoxy, Cyanomethyl, 2-Hydroxyethyl, Benzyl oder einen Rest der Formel -CR⁸= CH-CO-OR⁶ bezeichnet, wobei
- R⁸: Wasserstoff, C₁- bis C₆-Alkyl oder einen Rest der Formel -CO-OR⁶ bedeutet, und
- X: für Sauerstoff oder NH steht,
als Lichtschutzmittel und Stabilisatoren für organisches Material.

Da ein Teil der Verbindungen I neue Stoffe darstellt, betrifft die Erfindung auch diese neuen Stoffe.

Weiterhin betrifft die Erfindung mit den Verbindungen I gegen die Einwirkung von Licht, Sauerstoff und Wärme stabilisiertes organisches Material, insbesondere stabilisierte Kunststoffe und Lacke.

Organisches Material, insbesondere Kunststoffe und Lacke, wird bekanntermaßen sehr schnell, vor allem durch Einwirkung von Licht, zerstört. Diese Zerstörung zeigt sich üblicherweise in Vergilbung, Verfärbung, Rißbildung oder Versprödung des Materials. Mit Lichtschutzmitteln und Stabilisatoren soll daher ein zufriedenstellender Schutz gegen die Zerstörung von organischem Material durch Licht, Sauerstoff und Wärme erzielt werden.

So werden in der US-A 3 079 366 (1) u.a. 3-(Arylamino)-2-cyanoacrylsäure-alkylester und 3-(Arylamino)-2-(alkoxycarbonyl)acrylsäure-alkylester als Lichtschutzmittel für Kunststoffe beschrieben.

In DE-OS 19 11 768 (2) sind substituierte Aminovinylphosphonsäureester beschrieben, welche u.a. am N-Atom Arylgruppen mit 6 bis 7 C-Atomen sowie am α-C-Atom der Vinylgruppe eine niedere Alkoxycarbonylgruppe tragen können. Diese Verbindungen werden als Reagentien zur Aldehydsynthese, insbesondere zur Formylolefinierung empfohlen. Aus der Literaturstelle Phosphorus und Sulfur, 1987, Vol. 31, pp. 231-243 (3) ist die Verbindung α-Cyano-β-(phenylamino)vinyl-diethylphosphonat bekannt. Weder in (2) noch in (3) wird jedoch ein Hinweis auf die Verwendung als Lichtschutzmittel oder Stabilisator gegeben.

Unbefriedigend ist bei den genannten Mitteln des Standes der Technik häufig noch die zu geringe Verträglichkeit mit Kunststoffen, die zu geringe Dauer der Schutzwirkung, die Eigenfarbe der Substanzen, die Neigung zur Flüchtigkeit und die thermische Zersetzung der Stabilisatoren beim Einarbeiten bei erhöhter Temperatur.

Aufgabe der vorliegenden Erfindung war es daher, Lichtschutzmittel bzw. Stabilisatoren bereitzustellen, die einen wirkungsvolleren Schutz für organisches Material mit sich bringen.

Demgemäß wurden die eingangs definierten Aminovinylphosphonsäureester I gefunden.

Als geradkettige oder verzweigte Alkylreste für R², R^{3,} R⁵ bis R⁸, als Substituenten am Phenylkern und an heterocyclischen Ringen und als Alkoholrest in Alkoxycarbonylgruppen, die als C₁- bis C₆-, C₁- bis C₁₂- und C₁- bis C₂₀-Alkylreste angesprochen sind, eignen sich beispielsweise Methyl, Ethyl, n-Propyl, iso-Propyl, n-Butyl, iso-Butyl, sec.-Butyl, tert.-Butyl, n-Amyl, iso-Amyl, sec.-Amyl, tert.-Amyl, Neopentyl, n-Hexyl, n-Heptyl, n-Octyl, 2-Ethylhexyl, n-Nonyl, iso-Nonyl, n-Decyl, n-Undecyl, n-Dodecyl, n-Tridecyl, iso-Tridecyl, n-Tetradecyl, n-Pentadecyl, n-Hexadecyl, n-Heptadecyl, n-Octadecyl und n-Eicosyl. Bevorzugt werden generell niedere Alkylreste, vor allem C₁- bis C₄-Alkylreste, insbesondere Methyl und Ethyl.

Als geradkettiges oder verzweigtes C₂- bis C₆-Alkanoyl für R⁷ kommen vor allem Acetyl, deneben aber auch Propionyl, Butyryl, iso-Butyryl, Pentanoyl und Hexanoyl in Betracht.

Als geradkettige oder verzweigte C₁- bis C₁₂-Alkoxygruppen für R⁷ und als Substituenten am Phenylkern und an heterocyclischen Ringen eignen sich vor allem C₁- bis C₄-Alkoxygruppen wie Methoxy, Ethoxy, n-Propoxy, iso-Propoxy, n-Butoxy, iso-Butoxy, sec.-Butoxy und tert.-Butoxy, daneben aber auch n-Pentoxy, n-Hexoxy, iso-Hexoxy, n-Heptoxy, iso-Heptoxy, n-Octoxy, 2-Ethylhexoxy, iso-Octoxy, n-Nonoxy, n-Decoxy, n-Undecoxy und n-Dodecoxy.

C₅- bis C₆-CYcloalkoxygruppen für R⁷ sind vor allem Cyclopentoxy und Cyclohexoxy.

Beim Vorliegen eines Restes der Formel -CR⁸=CH-CO-OR⁶ für R⁷ bedeutet R⁸ vorzugsweise C₁- bis C₄-Alkoxycarbonyl wie vor allem Methoxycarbonyl und Ethoxycarbonyl oder insbesondere Wasserstoff.

Als C₅- bis C₈-Cycloalkylreste für R², R³ und R⁶ kommen vor allem C₅- bis C₆-Cycloalkyl wie Cyclopentyl und Cyclohexyl, daneben der auch Cycloheptyl, Cyclooctyl, Methylcyclopentyl, Dimethylcyclopentyl, Methylcyclohexyl, Ethylcyclohexyl und Dimethylcyclohexyl in Betracht.

Als C₇- bis C₁₈-Aralkylreste für R^{2,} R³ und R⁶ eignen sich beispielsweise Naphthylmethyl, Diphenylmethyl oder Methylbenzyl, insbesondere jedoch C₇- bis C₁₈-Phenylalkyl wie 1-Phenylethyl, 2-Phenylethyl, 1-Phenylpropyl, 2-Phenylpropyl, 3-Phenylpropyl, 2-Phenylprop-2-yl, 4-Phenylbutyl, 2,2-Dimethyl-2-phenylethyl, 5-Phenylamyl, 10-Phenyldecyl, 12-Phenyldodecyl oder vor allem Benzyl.

Als Tolylreste kommen ortho-, meta und vor allem para-Tolyl in Betracht.

Unter Halogenatomen sind Fluor, Jod, vor allem jedoch Brom und insbesondere Chlor zu verstehen.

Als fünf- oder sechsgliedrige ungesättigte oder gesättigte heterocyclische Ringe mit bis zu drei Heteroatomen aus der Gruppe Stickstoff, Sauerstoff und Schwefel, welche zusätzlich benzanelliert und durch die bezeichneten Reste substituiert sein können, kommen in Betracht:

Tetrahydrofuran, Furan, Tetrahydrothiophen, Thiophen, Pyrrolidin, Pyrrolin, Pyrrol, Isoxazol, Oxazol, Thiazol, Pyrazol, Imidazolin, Imidazol, 1,2,3-Triazolidin, 1,2,3- und 1,2,4-Triazol, 1,2,3-, 1,2,4- und 1,2,5-Oxadiazol, Tetrahydropyran, Dihydropyran, 2H- und 4H-Pyran, Piperidin, 1,3- und 1,4-Dioxan, Morpholin, Pyrazan, Pyridin, Pyrimidin, Pyridazin, Pyrazin, 1,2,5-Oxathiazin, 1,3,5-, 1,2,3- und 1,2,4-Triazin, Benzofuran, Thionaphthen, Indolin, Indol, Isoindolin, Benzoxazol, Indazol, Benzimidazol, Chroman, Isochroman, 2H- und 4H-Chromen, Chinolin, Isochinolin, 1,2,3,4-Tetrahydroisochinolin, Cinnolin, Chinazolin, Chinoxalin, Phthalazin und Benzo-1,2,3-triazin.

Treten als Reste R⁴ substituierte Phenylreste auf, ist der bevorzugte Substitutionsgrad 2 oder insbesondere 1. Einfach substituierte Phenylreste sind ortho-, meta- oder vorzugsweise parasubstituiert, zweifach substituierte Phenylreste weisen häufig ein 2,4-Substitutionsmuster und dreifach substituierte Phenylreste oft ein 2,4,6-Substitutionsmuster auf. Beim Auftreten von zwei oder drei Substituenten können diese gleich oder verschieden sein.

Die Struktur I umfaßt bezüglich der räumlichen Stellung der Substituenten an der C-C-Doppelbindung in den Verbindungen I sowohl die jeweiligen E- als auch die Z-Isomeren. Selbstverständlich können auch Mischungen beider Isomeren auftreten.

Eine bevorzugte Ausführungsform stellt die Verwendung von Aminovinylphosphonsäureestern I dar, bei denen R¹ Cyano oder C₁- bis C₁₂-Alkoxycarbonyl bezeichnet.

Eine weitere bevorzugte Ausführungsform stellt die Verwendung von Aminovinylphosphonsäureestern I dar, bei denen R² und R³ C₁- bis C₆-Alkyl bedeuten.

Eine weitere bevorzugte Ausführungsform stellt die Verwendung von Aminovinylphosphonsaureestern I dar, bei denen R⁴ Phenyl, welches durch ein oder zwei C₁- bis C₄-Alkylgruppen, C₁- bis C₄-Alkoxygruppen, Chloratome, Cyanogruppen, Hydroxylgruppen oder C₁- bis C₄-Alkoxycarbonylgruppen substituiert sein kann, einen sechsgliedrigen ungesättigten oder gesättigten heterocyclischen Ring mit bis zu drei Stickstoffatomen, welcher zusätzlich benzanelliert und durch ein oder zwei C₁- bis C₄-Alkylgruppen, C₁- bis C₄-Alkoxygruppen, Chloratome, Cyanogruppen, Hydroxygruppen oder C₁- bis C₄-Alkoxycarbonylgruppen substituiert sein kann, oder eine Gruppierung der Formel 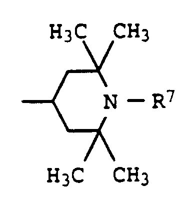 bezeichnet und R⁵ Wasserstoff bedeutet.

Als heterocyclische Ringe für R⁴ eignen sich in besonderem Maße Pyridin, 2-, 3- und 4-Methylpyridin, Pyrimidin, Pyridazin, Pyrazin und 1,3,5-Triazin.

Die erfindungsgemäß verwendeten Aminovinylphosphonsäureester I lassen sich nach an sich bekannter Methoden herstellen. Die Herstellung kann beispielsweise durch Umsetzung von Cyanomethanphosphonsäureestern bzw. Phosphonoessigsäureestern mit Trialkylorthoformiat, insbesondere Triethylorthoformiat oder Trimethylorthoformiat, und aromatischen bzw. heterocyclischen Aminen erfolgen.

Weiterhin können die Verbindungen I durch Umsetzung von Dimethylaminomethylencyanomethanphosphonsäureestern bzw. Dimethylaminomethylenphosphonessigestern mit aliphatischen Aminen, z.B. Triacetondiamin, hergestellt werden.

Die Umsetzung wird zweckmäßigerweise in einem geeigneten polaren organischen Lösungsmittel wie einem Alkohol, z.B. n-Propanol, n-Butanol, Ethylenglykol, Diethylenglykol, Ethylenglykolmonomethylether, Cyclohexanol oder ähnlichen Verbindungen, vorgenommen. Als Lösungsmittel eignen sich auch Carbonsäureamide wie N,N-Dimethylformiat oder überschüssiges Trialkylorthoformiat. Bilden die verwendeten Ausgangsverbindungen bereits eine flüssige Mischung, kann auf ein zusätzliches Lösungsmittel verzichtet werden.

Als Katalysatoren für die Umsetzung können bei sehr langen Reaktionszeiten gewünschtenfalls zusätzlich Lewis-Säuren wie Borsäure, AlCl₃, ZrCl₄, TiCl₄ oder vor allem znCl₂ in der hierfür üblichen Mengen verwendet werden.

Sollen in den Verbindungen I die Reste R⁷ eine Acrylsäureester-Gruppierung der Formel -CR⁸=CH-CO-OR⁶ bezeichnen, werden zur Herstellung solcher Verbindungen zweckmäßigerweise Verbindungen I, bei denen R⁷ für Wasserstoff steht, mit Acetylencarbonsäurederivaten wie Propiolsäureestern oder Acetylendicarbonsäureestern umgesetzt.

Die erfindungsgemäß verwendeten Verbindungen I eignen sich in hervorragender Weise zum Stabilisieren von organischem Material gegen die Einwirkung von Licht, Sauerstoff und Wärme. Sie sind auch wirksam als Metalldesaktivatoren. Sie werden dem zu stabilisierenden organischen Material in einer Konzentration von 0,01 bis 5 Gew.-%, vorzugsweise von 0,02 bis 2 Gew.-%, bezogen auf das organische Material, vor, während oder nach seiner Herstellung zugesetzt.

Unter organischem Material sind beispielsweise kosmetische Präparate wie Salben und Lotionen, Arzneimittelformulierungen wie Pillen und Zäpfchen, photographische Aufzeichnungsmaterialien, insbesondere photographische Emulsionen, oder Vorprodukte für Kunststoffe und Lacke, insbesondere jedoch Kunststoffe und Lacke selbst, zu verstehen.

Gegenstand der vorliegenden Erfindung ist außerdem gegen die Einwirkung von Licht, Sauerstoff und Wärme stabilisiertes organisches Material, insbesondere Kunststoffe und Lacke, welches die Verbindungen I in den oben angegebenen Konzentrationen enthält.

Zur Vermischung der erfindungsgemäß verwendeten Verbindungen I vor allem mit Kunststoffen können alle bekannten Vorrichtungen und Methoden zum Einmischen von Stabilisierungsmitteln oder anderen Zusätzen in Polymere angewandt werden.

Das durch die erfindungsgemaß verwendeten Verbindungen I stabilisierte organische Material kann gegebenenfalls noch weitere Additive enthalten, z.B. Antioxidantien, Lichtstabilisierungsmittel, Metalldesaktivatoren, antistatische Mittel,flammhemmende Mittel, Pigmente und Füllstoffe.

Antioxidantien und Lichtstabilisatoren, die neben den erfindungsgemaß verwendeten Verbindungen I zugesetzt werden können, sind z.B. Verbindungen auf der Basis sterisch gehinderter Phenole oder Schwefel oder Phosphor enthaltende Costabilisatoren.

Als derartige phenolische Antioxidationsmittel seien beispielsweise 2,6-Di-tert.-butyl-4-methylphenol, n-Octadecyl-β-(3,5-ditert.-butyl-4-hydroxyphenyl)-propionat, 1,1,3-Tris-(2-methyl-4-hydroxy-5-tert.-butylphenyl)-butan, 1,3,5-Trimethyl-2,4,6-tris-(3,5-di-tert.-butyl-4-hydroxybenzyl)-benzol, 1,3,5-Tris-(3,5-di-tert.-butyl-4-hydroxybenzyl)-isocyanurat, 1,3,5-Tris-[β-(3,5-di-tert.-butyl-4-hydroxybenzyl)-propionylethyl]-isocyanurat, 1,3,5-Tris-(2,6-dimethyl-3-hydroxy-4-tert.-butylbenzyl)-isocyanurat und Pentaerythrit-tetrakis-[β-3,5-di-tert.-butyl-4-hydroxy-phenyl)-propionat] erwähnt.

Als phosphorhaltige Antioxidantien kommen beispielsweise Tris-(nonylphenyl)-phosphit, Distearylpentaerythritdiphosphit, Tris-(2,4-di-tert.-butyl-phenyl)-phosphit, Tris-(2-tert.-butyl-4-methylphenyl)-phosphit, Bis-(2,4-di-tert.-butylphenyl)-pentaerythritdiphosphit und Tetrakis-(2,4-di-tert.-butylphenyl)-4,4'-biphenylendiphosphit in Betracht.

Als Schwefel enthaltende Antioxidationsmittel seien beispielsweise Dilaurylthiodipropionat, Dimyristylthiodipropionat, Distearylthiodipropionat, Pentaerythrittetrakis-(β-laurylthiopropionat) und Pentaerythrittetrakis-(β-hexylthiopropionat) genannt.

Weitere Antioxidantien und Lichtstabilisatoren, die zusammen mit den Verbindungen I verwendet werden können, sind z.B. 2-(2'-Hydroxyphenyl)-benztriazole, 2-Hydroxybenzophenone, Arylester von Hydroxybenzoesäuren, α-Cyanozimtsäurederivate, Benzimidazolcarbonsäureanilide, Nickelverbindungen oder Oxalsäuredianilide.

Eine besonders gute Stabilisierung erhält man, wenn zu den Verbindungen I noch mindestens ein weiterer Lichtstabilisator aus der Verbindungsklasse der sterisch gehinderten Amine in üblicher Konzentration zugesetzt wird.

Als weitere sterisch gehinderte Amine kommen hierfür z.B. in Betracht: Bis-(2,2,6,6-tetramethylpiperidyl)-sebacat, Bis-(1,2,2,6,6-pentamethylpiperidyl)-sebacat, das Kondensationsprodukt von l-Hydroxyethyl-2,2,6,6-tetramethyl-4-hydroxypiperidin mit Bernsteinsäure, das Kondensationsprodukt von N, N'-(2,2,6,6-tetramethylpiperidyl)-hexamethylendiamin mit 4-tert.-Octylamino-2,6-dichlor-1,3,5-triazin, Tris-(2,2,6,6-Tetramethylpiperidyl)-nitrilotriacetat, Tetrakis-(2,2,6,6-tetramethyl-4-piperidyl)-1,2,3,4-butan-tetracarbonsäure, 1,1'-(1,2-Ethandiyl)-bis-(3,3,5,5-tetramethylpiperazinon), die Kondensationsprodukte von 4-Amino-2,2,6,6-tetramethylpiperidinen mit Tetramethylolacetylendiharnstoffen.

Als Kunststoffe, die durch die erfindungsgemäß verwendeten Verbindungen I stabilisiert werden können, seien beispielsweise genannt:

Polymere von Mono- und Diolefinen, wie z.B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;

Copolymerisate von Mono- oder Diolefinen mit anderen Vinylmonomeren, wie z.B. Ethylen-Alkylacrylat-Copolymere, Ethylen-Alkylmethacrylat-Copolymere, Ethylen-Vinylacetat-Copolymere oder Ethylen-Acrylsäure-Copolymere;

Polystyrol sowie Copolymere von Styrol oder α-Methylstyrol mit Dienen und/oder Acrylderivaten, wie z.B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); Halogenhaltige Polymere, wie z.B. Polyvinylchlorid, Polyvinylfluorid, Polyvinylidenfluorid sowie deren Copolymere;

Polymere, die sich von α,β-ungesättigten Säuren und deren Derivaten ableiten, wie Polyacrylate, Polymethacrylate, Polyacrylamide und Polyacrylnitrile;

Polymere, die sich von ungesättigten Alkoholen und Aminen bzw. von deren Acrylderivaten oder Acetalen ableiten, z.B. Polyvinylalkohol und Polyvinylacetat;

Polyurethane, Polyamide, Polyharnstoffe, Polyester, Polycarbonate, Polysulfone, Polyethersulfone und Polyetherketone.

Weiterhin können mit den erfindungsgemäß verwendeten Verbindungen I Lacküberzüge stabilisiert werden, z. B. Industrielackierungen. Unter diesen sind Einbrennlackierungen, unter diesen wiederum Fahrzeuglackierungen, vorzugsweise Zweischichtlackierungen, besonders hervorzuheben.

Die erfindungsgemäß verwendeten Verbindungen I können in fester oder gelöster Form dem Lack zugesetzt werden. Ihre gute Löslichkeit in Lacksystemen ist dabei von besonderem Vorteil.

Bevorzugt werden die erfindunsgemäß verwendeten Verbindungen I zum Stabilisieren von Polyurethanen, Polyestern, Polystyrol, Polyolefinen wie Ethylen- oder Propylenpolymerisaten, Polyamiden sowie ABS- und SAN-Polymeren, insbesondere von Formmassen hieraus, und von Lacküberzügen, insbesondere aus säurehärtenden Lakken, verwendet.

Ein weiteres bevorzugtes Einsatzgebiet ist die Stabilisierung von Fasern aus Polypropylen und Polyamid.

Die erfindungsgemäß verwendeten Verbindungen I zeichnen sich durch eine gute Verträglichkeit mit den üblichen Kunststoffarten und durch eine gute Löslichkeit und eine ausgezeichnete Verträglichkeit in den üblichen Lacksystemen aus. Sie haben in der Regel keine oder nur eine sehr geringe Eigenfarbe, sind bei den üblichen Kunststoff- und Lack-Verarbeitungstemperaturen stabil und nicht flüchtig und bewirken vor allen Dingen eine lange Schutzdauer der mit ihnen behandelten Materialien.

Mit Ausnahme des aus der Literaturstelle (3) bekannten Aminovinylphosphonsäureester stellen die Verbindungen I neue Stoffe dar.

Demgemäß sind auch Gegenstand der vorliegenden Erfindung Aminovi nylphosphonsäureester der allgemeinen Formel I 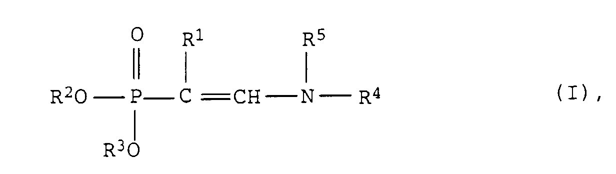 ausgenommen α-Cyano-β(phenylamino)-diethylphosphonat, in der die Variablen die oben genannten Bedeutungen haben.

Weiterhin sind Gegenstand der vorliegenden Erfindung Aminovinylphosphonsäureester der allgmeinen Formel I, in der
- R¹: einen Rest der Formel -CO-OR⁶ oder eine Gruppierung der Formel 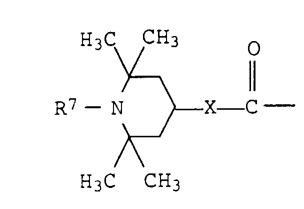 bezeichnet, und
- R⁴: Phenyl oder Tolyl bedeutet.

Die Erfindung wird durch die nachstehenden Beispiele weiter erläutert. Die Herstellbedingungen wurden nicht optimiert.

### Herstellungsbeispiele

### Beispiel 1

35,4 g (0,2 mol) Diethylphosphonacetonitril, 33 ml (0,2 mol) Triethylorthoformiat und 21,4 g (0,2 mol) 4-Aminotoluol wurden langsam auf 120°C erwärmt und 5 h gerührt. Das gebildete Ethanol wurde dabei abdestilliert. Danach wurde abgekühlt, mit Ethanol aufgeschlämmt und 1 Stunde bei Raumtemperatur gerührt. Die Suspension wurde anschließend abgesaugt und mit Ethanol gewaschen. Man erhielt 20 g α-Cyano-β-(4-methylphenylamino)vinyl-diethylphosphonat in Form von farblosen Kristallen vom Schmelzpunkt 116°C.

Die spektroskopischen Daten sind in Tabelle 1 angegeben.

### Beispiele 2 bis 8

Analog zu Beispiel 1 wurden unter Verwendung der entsprechenden aromatischen bzw. heterocyclischen Amine die in Tabelle 1 aufgeführten Produkte aus Diethylphosphonacetonitril hergestellt. Die Schmelzpunkte und die spektroskopischen Daten der Produkte sind ebenfalls in Tabelle 1 angegeben.

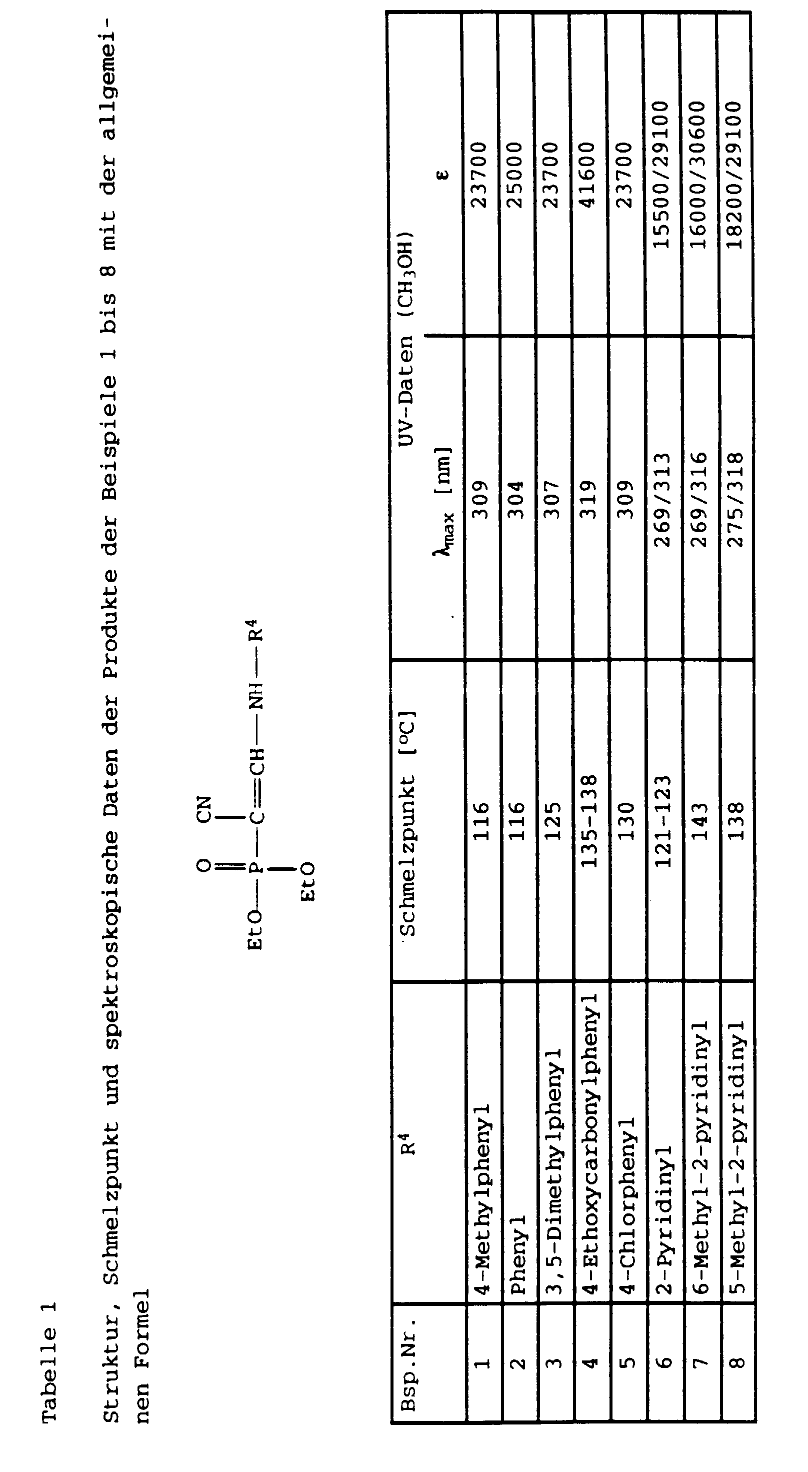

### Beispiel 9

18,7 g (0,12 mol) Triacetondiamin und 18,7 g (0,12 mol) (N,N-Dimethylaminomethylen)-cyanomethanphosphonsäurediethylester (dargestellt aus Cyanomethanphosphonsäurediethylester und N,N-Dimethylformamidacetal) wurden in 50 ml Ethanol unter Zugabe von 4 Tropfen konz. Salzsäure 6 h unter Rückfluß erhitzt. Danach wurde abgekühlt, der gebildete Niederschlag abgesaugt und mit Diethylether gewaschen. Man erhielt 15,6 g farblose Kristalle vom Schmelzpunkt 255°C (Zers.) der Formel

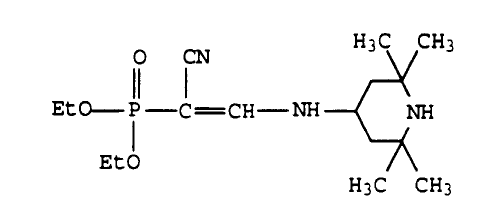

### Beispiel 10

Analog zu Beispiel 9 wurde aus Triacetondiamin und Dimethylaminomethylen-phosphonessigsäuretriethylester die Verbindung der folgenden Formel in Form farbloser Kristalle vom Schmelzpunkt 76°C erhalten:

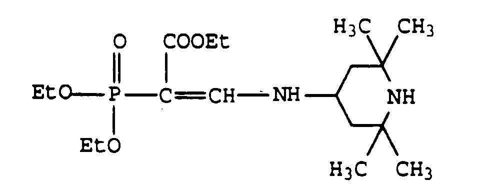

### Beispiel 11

24 g (0,07 mol) der Verbindung aus Beispiel 9 wurde mit 9,8 g (0,1 mol) Propiolsäureethylester in 50 ml Ethanol 3 h unter Rückfluß erhitzt. Danach wurde abgekühlt, der Niederschlag abgesaugt und mit wenig Ethanol gewaschen. Man erhielt 24,0 g farblose Kristalle vom Schmelzpunkt 245-247 °C der Formel 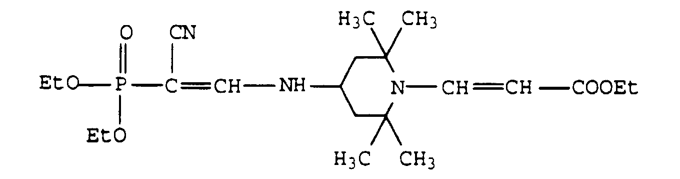 Spektroskopische Daten: λₘₐₓ (CH₃OH) = 281 mm, ε = 44800

### Beispiel 12

Analog zu Beispiel 11 wurde aus der Verbindung aus Beispiel 10 und Propiolsäureethylester die Verbindung mit der folgenden Formel in Form farbloser Kristalle vom Schmelzpunkt 141°C erhalten: 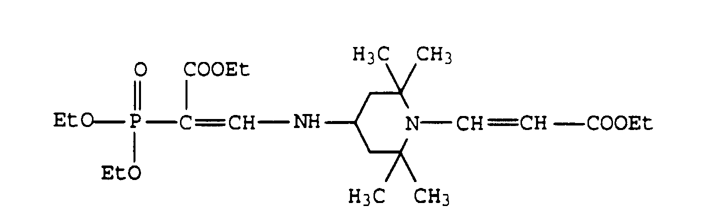 Spektroskopische Daten: λₘₐₓ (CH₃OH) = 283 mm, ε = 50200

### Anwendungsbeispiele

Zur Herstellung von Belichtungsproben aus ABS wurden 0,5 Gew.-% des sterisch gehinderten Amins der Formel IV und 0,5 Gew.-% des in Tabelle 2 angegebenen Aminovinylphosphonsäureesters in ABS vom Typ Terluran® 967 K (unpigmentiert) durch einmaliges Extrudieren bei einer Massetemperatur von 250°C gelöst und das anfallende Granulat wurde bei 260°C zu 2 mm dicken Formkörpern gespritzt.

Die Spritzlinge wurden in einem Schnellbewitterungsgerät vom Typ Xenotest® 1200 auf ihre Licht- und Wetterechtheit getestet.

Ein Maß für die Vergilbung und somit für den photooxidativen Abbau des Polymeren ist, in Abhängigkeit von der Bewitterungszeit, der Yellowness Index (YI), gemäß Annual Book of ASTM Standards D 1925-70 (Reapproved 1977), der mit zunehmender Vergilbung ansteigt.

Die verwendeten Stabilisatorgemische sowie die Ergebnisse der Belichtung sind in Tabelle 2 zusammengestellt.

Zum Vergleich dienten ABS-Spritzlinge ohne Stabilisator sowie ABS-Spritzlinge mit einer Mischung aus dem sterisch gehinderten Amin IV und dem aus (1) bekannten Cyanoacrylsäureester V.

**Tabelle 2**

| YI-Werte nach Schnellbewitterung (Xenotest® 1200) | | |
|---|---|---|
| Stabilisatorgemisch | 0 h | nach 600 h |
| erfindungsgemäß 0,5 Gew.-% IV + 0,5 Gew.-% Beispiel 1 | 43 | 25 |
| 0,5 Gew.-% IV + 0,5 Gew.-% Beispiel 2 | 42 | 28 |
| 0,5 Gew.-% IV + 0,5 Gew.-% Beispiel 3 | 41 | 26 |
| zum Vergleich: ohne Stabilisator | 38 | 52 |
| zum Vergleich: 0,5 Gew.-% IV + 0,5 Gew.-% V | 43 | 29 |

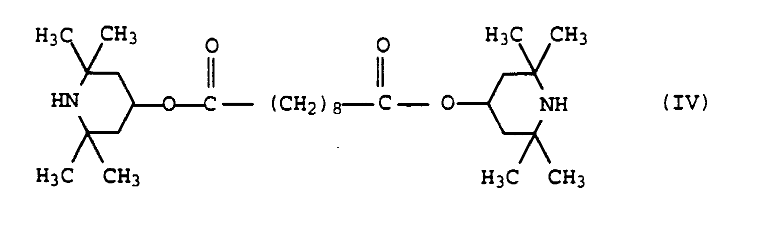

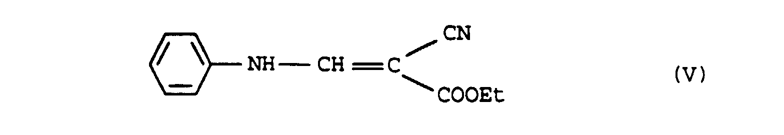

## Patentansprüche

1. Verwendung von Aminovinylphosphonsäureestern der allgemeinen Formel I 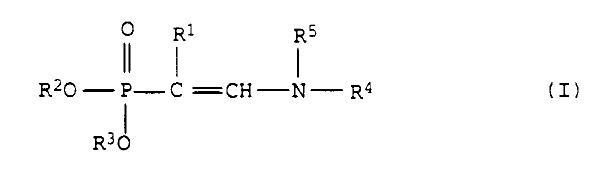 in der
R¹ Cyano, einen Rest der Formel -CO-OR⁶ oder eine Gruppierung der Formel 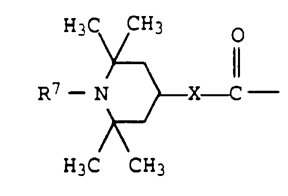 bezeichnet,
R², R³ und R⁶ C₁- bis C₂₀-Alkyl, C₅- bis C₈-Cycloalkyl, C₇- bis C₁₈-Aralkyl, Phenyl oder Tolyl bedeuten,
R⁴ Phenyl, welches durch ein bis drei C₁- bis C₁₂-Alkylgruppen, C₁- bis C₁₂-Alkoxygruppen, Halogenatome, Cyanogruppen, Hydroxylgruppen, Phenylgruppen oder Gruppen der Formel -CO-OR⁶, -CO-R⁶, -CO-NHR⁶, -O-CO-R⁶ oder -NH-CO-R⁶ substituiert sein kann, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert und durch ein bis drei C₁- bis C₁₂-Alkylgruppen, C₁- bis C₁₂-Alkoxygruppen, Halogenatome, Cyanogruppen, Hydroxylgruppen, Phenylgruppen, Phenoxygruppen oder C₁- bis C₁₂-Alkoxycarbonylgruppen substituiert sein kann, oder eine Gruppierung der Formel 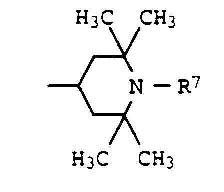 bezeichnet,
R⁵ Wasserstoff oder C₁- bis C₁₂-Alkyl bedeutet,
R⁷ Wasserstoff, C₁- bis C₆-Alkyl, Formyl, C₂- bis C₆-Alkanoyl, C₁- bis C₁₂-Alkoxy, C₅- bis C₆-Cycloalkoxy, Cyanomethyl, 2-Hydroxyethyl, Benzyl oder einen Rest der Formel -CR⁸=CH-CO-OR⁶ bezeichnet, wobei
R⁸ Wasserstoff, C₁- bis C₆-Alkyl oder einen Rest der Formel -CO-OR⁶ bedeutet, und
X für Sauerstoff oder NH steht,
als Lichtschutzmittel und Stabilisatoren für organisches Material.

2. Verwendung von Aminovinylphosphonsäureestern nach Anspruch 1, bei denen R¹ Cyano oder C₁- bis C₁₂-Alkoxycarbonyl bezeichnet.

3. Verwendung von Aminovinylphosphonsäureestern nach Anspruch 1 oder 2, bei denen R² und R³ C₁- bis C₆-Alkyl bedeuten.

4. Verwendung von Aminovinylphosphonsäureestern nach den Ansprüchen 1 bis 3, bei denen R⁴ Phenyl, welches durch ein bis zwei C₁- bis C₄-Alkylgruppen, C₁- bis C₄-Alkoxygruppen, Chloratome, Cyanogruppen, Hydroxylgruppen oder C₁- bis C₄-Alkoxycarbonylgruppen substituiert sein kann, einen sechsgliedrigen ungesättigten oder gesättigten heterocyclischen Ring mit bis zu drei Stickstoffatomen, welcher zusätzlich benzanelliert und durch ein oder zwei C₁- bis C₄-Alkylgruppen, C₁- bis C₄-Alkoxygruppen, Chloratome, Cyanogruppen, Hydroxylgruppen oder C₁- bis C₄-Alkoxycarbonylgruppen substituiert sein kann, oder eine Gruppierung der Formel 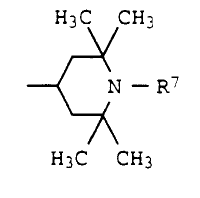 bezeichnet und R⁵ Wasserstoff bedeutet.

5. Verwendung von Aminovinylphosphonsäureestern I gemäß den Ansprüchen 1 bis 4 als Lichtschutzmittel und Stabilisatoren für Kunststoffe und Lacke.

6. Verfahren zum Stabilisieren von organischem Material gegen die Einwirkung von Licht, Sauerstoff und Wärme, dadurch gekennzeichnet, daß man hierzu Aminovinylphosphonsäureester I gemäß den Ansprüchen 1 bis 4 verwendet.

7. Verfahren zum Stabilisieren von Kunststoffen und Lacken gegen die Einwirkung von Licht, Sauerstoff und Wärme, dadurch gekennzeichnet, daß man hierzu Aminovinylphosphonsäureester I gemäß den Ansprüchen 1 bis 4 verwendet.

8. Gegen die Einwirkung von Licht, Sauerstoff und Wärme stabilisiertes organisches Material, enthaltend 0,01 bis 5 Gew.-%, bezogen auf die Menge des organischen Materials, eines oder mehrerer Aminovinylphosphonsäureester I gemäß den Ansprüchen 1 bis 4.

9. Gegen die Einwirkung von Licht, Sauerstoff und Wärme stabilisierte Kunststoffe und Lacke, enthaltend 0,01 bis 5 Gew.-%, bezogen auf die Menge der Kunststoffe bzw. Lacke, eines oder mehrerer Aminovinylphosphonsäureester I gemäß den Ansprüchen 1 bis 4.

10. Aminovinylphosphonsäureester der allgemeinen Formel I gemäß Anspruch 1, ausgenommen α-Cyano-β-(phenylamino)vinyl-diethylphosphonat.

11. Aminovinylphosphonsäureester gemäß Anspruch 10, wobei
R¹ einen Rest der Formel -CO-OR⁶ oder eine Gruppierung der Formel 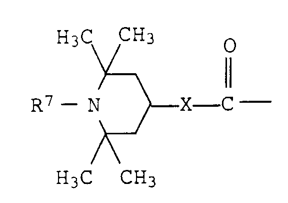 bezeichnet, und
R⁴ Phenyl oder Tolyl bedeutet.

## Claims

1. Use of an aminovinylphosphonic ester of the formula I 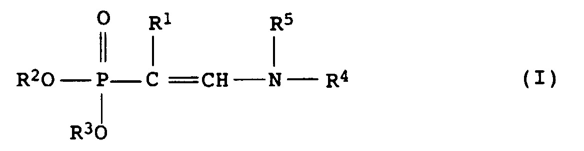 where
R¹ is cyano, a radical of the formula -CO-OR⁶ or a group of the formula 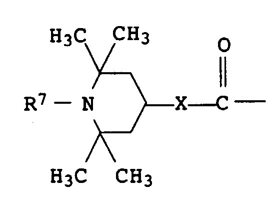
R², R³ and R⁶ are C₁-C₂₀-alkyl, C₅-C₈-cycloalkyl, C₇-C₁₈-aralkyl, phenyl or tolyl,
R⁴ is phenyl which may be substituted by one to three C₁-C₁₂-alkyl groups, C₁-C₁₂-alkoxy groups, halogen atoms, cyano groups, hydroxyl groups, phenyl groups or groups of the formula -CO-OR⁶, -CO-R⁶, -CO-NHR⁶, -O-CO-R⁶ or -NH-CO-R⁶, or is a five-membered or six-membered unsaturated or saturated heterocyclic ring having up to three hetero atoms selected from the group consisting of nitrogen, oxygen and sulfur, which may additionally be benzofused and may be substituted by one to three C₁-C₁₂-alkyl groups, C₁-C₁₂-alkoxy groups, halogen atoms, cyano groups, hydroxyl groups, phenyl groups, phenoxy groups or C₁-C₁₂-alkoxycarbonyl groups, or is a group of the formula 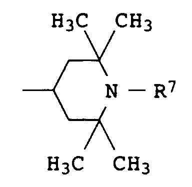
R⁵ is hydrogen or C₁-C₁₂-alkyl,
R⁷ is hydrogen, C₁-C₆-alkyl, formyl, C₂-C₆-alkanoyl, C₁-C₁₂-alkoxy, C₅- or C₆-cycloalkoxy, cyanomethyl, 2-hydroxyethyl, benzyl or a radical of the formula -CR⁸=CH-CO-OR⁶,
R⁸ is hydrogen, C₁-C₆-alkyl or a radical of the formula -CO-OR⁶, and
X is oxygen or NH,
as a light stabilizer or stabilizer for organic material.

2. Use of an aminovinylphosphonic ester as claimed in claim 1, in which R¹ is cyano or C₁-C₁₂-alkoxycarbonyl.

3. Use of an aminovinylphosphonic ester as claimed in claim 1 or 2, in which R² and R³ are each C₁-C₆-alkyl.

4. Use of an aminovinylphosphonic ester as claimed in any of claims 1 to 3, in which R⁴ is phenyl which may be substituted by one or two C₁-C₄-alkyl groups, C₁-C₄-alkoxy groups, chlorine atoms, cyano groups, hydroxyl groups or C₁-C₄-alkoxycarbonyl groups, or is a six-membered unsaturated or saturated heterocyclic ring which has up to three nitrogen atoms and may additionally be benzofused and substituted by one or two C₁-C₄-alkyl groups, C₁-C₄-alkoxy groups, chlorine atoms, cyano groups, hydroxyl groups or C₁-C₄-alkoxycarbonyl groups, or is a group of the formula 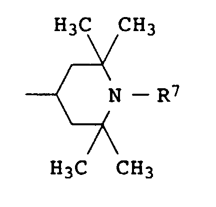 and R⁵ is hydrogen.

5. Use of an aminovinylphosphonic ester I as claimed in any of claims 1 to 4 as a light stabilizer or stabilizer for plastics and coatings.

6. A method for stabilizing organic material to the action of light, oxygen and heat, wherein an aminovinylphosphonic ester I as claimed in any of claims 1 to 4 is used for this purpose.

7. A method for stabilizing plastics and coatings to the action of light, oxygen and heat, wherein an aminovinylphosphonic ester I as claimed in any of claims 1 to 4 is used for this purpose.

8. An organic material stabilized to the action of light, oxygen and heat and containing from 0.01 to 5 % by weight, based on the amount of the organic material, of one or more aminovinylphosphonic esters I as claimed in any of claims 1 to 4.

9. A plastic or coating stabilized to the action of light, oxygen and heat and containing from 0.01 to 5 % by weight, based on the amount of the plastic or coating, of one or more aminovinylphosphonic esters I as claimed in any of claims 1 to 4.

10. An aminovinylphosphonic ester of the formula I as claimed in claim 1, excepting diethyl α-cyano-β-(phenylamino)vinylphosphonate.

11. An aminovinylphosphonic ester as claimed in claim 10, wherein
R¹ is a radical of the formula -CO-OR⁶ or a group of the formula 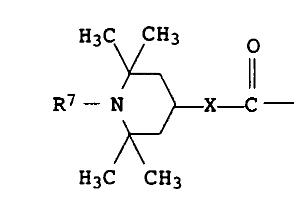 and
R⁴ is phenyl or tolyl.

## Revendications

1. Utilisation d'esters d'acides aminovinylphosphoniques de formule générale I 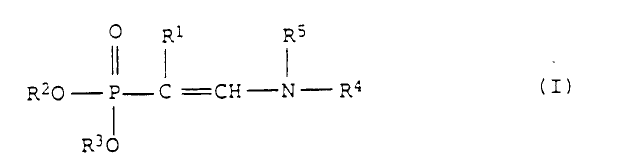 dans laquelle
R¹ est un groupe cyano, un radical de formule -CO-OR⁶ ou un groupement de formule 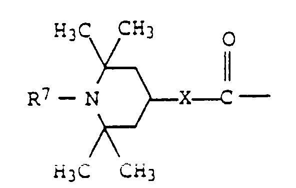
R², R³ et R⁶ sont des groupes alkyle en C₁ à C₂₀, cycloalkyle en C₅ à C₈, aralkyle en C₇ à C₁₈, phényle ou tolyle
R⁴ est un groupe phényle, qui peut être substitué une à trois fois par des groupes alkyle en C₁ à C₁₂, des groupes alcoxy en C₁ à C₁₂, des atomes d'halogène, des groupes cyano, des groupes hydroxyle, des groupes phényle ou des groupes de formule -CO-OR⁶, -C-R⁶, -C-NHR⁶, -O-C-R⁶ ou -NH-C-R⁶ ; un noyau hétérocyclique saturé ou insaturé ayant cinq ou six chaînons, avec jusqu'à trois hétéroatomes choisis dans le groupe comprenant l'azote, l'oxygène et le soufre, et qui peut être en outre benzo-condensé et être substitué une à trois fois par des groupes alkyle en C₁ à C₁₂, des groupes alcoxy en C₁ à C₁₂, des atomes d'halogène, des groupes cyano, des groupes hydroxyle, des groupes phényle, des groupes phénoxy ou des groupes (alcoxy en C₁ à C₁₂)carbonyle ; ou encore un groupement de formule 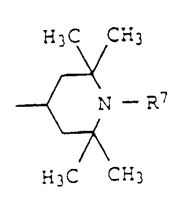
R⁵ est un hydrogène ou un groupe alkyle en C₁ à C₁₂,
R⁷ est un hydrogène ou un groupe alkyle en C₁ à C₆, formyle, alcanoyle en C₂ à C₆, alcoxy en C₁ à C₁₂, cycloalcoxy en C₅ à C₆, cyanométhyle, 2-hydroxyéthyle, benzyle, ou encore un radical de formule -CR⁸=CH-CO-OR⁶, où
R⁸ est un hydrogène ou un groupe alkyle en C₁ à C₆ ou un radical de formule -CO-OR⁶, et
X est un oxygène ou NH,
en tant qu'agents de protection contre la lumière et stabilisants pour un matériau organique.

2. Utilisation d'esters d'acides aminovinylphosphoniques selon la revendication 1, dans lesquels R¹ est le groupe cyano ou un groupe (alcoxy en C₁ à C₂) carbonyle.

3. Utilisation d'esters d'acides aminovinylphosphoniques selon la revendication 1 ou 2, dans lesquels R² et R³ sont des groupes alkyle en C₁ à C₆.

4. Utilisation d'esters d'acides aminovinylphosphoniques selon les revendications 1 à 3, dans lesquels R⁴ est un groupe phényle pouvant être substitué une à deux fois par des groupes alkyle en C₁ à C₄, des groupes alcoxy en C₁ à C₄, des atomes de chlore, des groupes cyano, des groupes hydroxyle ou des groupes (alcoxy en C₁ à C₄)-carbonyle ; un noyau hétérocyclique saturé ou insaturé à six chaînons ayant jusqu'à trois atomes d'azote, qui peut en outre être benzo-condensé et être substitué par un ou deux groupes alkyle en C₁ à C₄, groupes alcoxy en C₁ à C₄, atomes de chlore, groupes cyano, groupes hydroxyle ou groupes (alcoxy en C₁ à C₄)carbonyle ; ou encore un groupement de formule 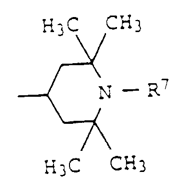 et R⁵ est un hydrogène.

5. Utilisation d'esters d'acides aminovinylphosphoniques I selon les revendications 1 à 4 en tant qu'agents de protection contre la lumière et stabilisants pour plastiques et vernis.

6. Procédé pour stabiliser un matériau organique contre l'action de la lumière, de l'oxygène et de la chaleur, caractérisé en ce qu'on utilise dans ce but des esters d'acides aminovinylphosphoniques I selon les revendications 1 à 4.

7. Procédé pour stabiliser des plastiques et des vernis contre l'action de la lumière, de l'oxygène et de la chaleur, caractérisé en ce qu'on utilise dans ce but des esters d'acides aminovinylphosphoniques I selon les revendications 1 à 4.

8. Matériau organique stabilisé contre l'action de la lumière, de l'oxygène et de la chaleur, contenant de 0,01 à 5 % en poids, par rapport à la quantité du matériau organique, d'un ou plusieurs esters d'acides aminovinylphosphoniques I selon les revendications 1 à 4.

9. Plastiques et vernis stabilisés contre l'action de la lumière, de l'oxygène et de la chaleur, contenant de 0,01 à 5 % en poids, par rapport à la quantité des plastiques et vernis, d'un ou plusieurs esters d'acides aminovinylphosphoniques I selon les revendications 1 à 4.

10. Esters d'acides aminovinylphosphoniques de formule générale I selon la revendication 1, à l'exception des phosphonates de diéthyle et d'α-cyano-β-(phénylamino) vinyl.

11. Esters d'acides aminovinylphosphoniques selon la revendication 10, dans lesquels
R¹ est un radical de formule -C-R⁶ ou un groupement de formule 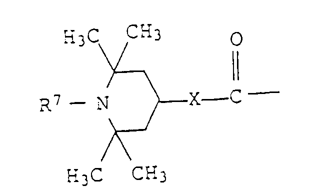 et
R⁴ est le groupe phényle ou tolyle.
